# EUROPEAN PATENT APPLICATION

(11) **EP 4 618 608 A1**
(43) Date of publication of application: **17.09.2025**
(21) Application number: 22964867.0
(22) Date of filing: 11.11.2022
(51) Int. Cl.: H04W 24/00

(54) **WIRELESS SENSING METHOD, AND DEVICE**

(71) Applicant: GUANGDONG OPPO MOBILE TELECOMMUNICATIONS CORP., LTD., Dongguan, Guangdong 523860 (CN)
(72) Inventor: SHI, Cong, Dongguan, Guangdong 523860 (CN); YU, Xinlei, Dongguan, Guangdong 523860 (CN)
(74) Representative: Novagraaf Technologies
(86) International application number: PCT/CN2022/131474
(87) International publication number: WO 2024/098399

(57) **Abstract**

The embodiments of the present application provide a wireless sensing method, and a device. Trigger information for performing sensing measurement on the basis of sensing measurement configuration information is introduced, so that the sensing measurement can be performed at an appropriate time, thereby reducing the power consumption of the sensing measurement and improving the throughput of a sensing receiving end. The wireless sensing method comprises: a first communication device receiving first information, wherein the first information comprises trigger information for performing sensing measurement on the basis of sensing measurement configuration information.

## Description

### TECHNICAL FIELD

Embodiments of the present disclosure relate to the field of communications, and in particular, relate to a method for wireless sensing, and a device.

### RELATED ART

In a new radio (NR) system, a target may be detected and estimated based on a sensing signal, to determine whether the target is present, and to estimate information such as a speed, a distance, and an angle of arrival. Specifically, resources over which the sensing receiver performs measurements needs to be configured semi-statically by the network in terms of a time interval (gap). The sensing receiver measures the sensing signal based on a configured gap, and during the gap, data fails to be transmitted or received. However, since the sensing receiver does not know when the sensing transmitter transmits the sensing signal, the sensing receiver may be assumed to measure the sensing signal within a corresponding gap after receiving the semi-static gap configuration from the network. This may lead to additional power consumption and loss of throughput performance of the sensing receiver.

### SUMMARY

Embodiments of the present disclosure provide a method for wireless sensing, and a device, which introduce trigger information for performing a sensing measurement based on sensing measurement configuration information. In this way, sensing measurement may be performed at an appropriate time, such that power consumption of the sensing measurement is reduced, and the throughput of the sensing receiver is improved.

In a first aspect, a method for wireless sensing is provided. The method is applicable to a first communication device, and includes: receiving first information; wherein the first information includes trigger information for performing a sensing measurement based on sensing measurement configuration information.

In a second aspect, a method for wireless sensing is provided. The method is applicable to a second communication device, and includes: transmitting first information; wherein the first information includes trigger information for performing a sensing measurement based on sensing measurement configuration information.

In a third aspect, a communication device is provided. The communication device is configured to perform the method according to the first aspect.

Specifically, the communication device includes functional modules for performing the method according to the first aspect.

In a fourth aspect, a communication device is provided. The communication device is configured to perform the method according to the second aspect.

Specifically, the communication device includes functional modules for performing the method according to the second aspect.

In a fifth aspect, a communication device is provided. The communication device includes a processor and a memory. The memory is configured to store one or more computer programs. The processor is configured to load and run the one or more computer programs stored in the memory, to cause the communication device to perform the method according to the first aspect.

In a sixth aspect, a communication device is provided. The communication device includes a processor and a memory. The memory is configured to store one or more computer programs. The processor is configured to load and run the one or more computer programs stored in the memory, to cause the communication device to perform the method according to the second aspect.

In a seventh aspect, an apparatus is provided. The apparatus is configured to perform the method according to any one of the first and second aspects.

Specifically, the apparatus includes: a processor, configured to load and run one or more computer programs from the memory, to cause the device equipped with the apparatus to perform the method according to any one of the first and second aspects.

In an eighth aspect, a computer-readable storage medium is provided. The computer-readable storage medium stores one or more computer programs. The one or more computer programs, when loaded and run by a computer, cause the computer to perform the method according to any one of the first and second aspects.

In a ninth aspect, a computer program product is provided. The computer program product includes one or more computer program instructions. The one or more computer program instructions, when loaded and executed by a computer, cause the computer to perform the method according to any one of the first and second aspects.

In a tenth aspect, a computer program is provided. The computer program, when loaded and run by a computer, causes the computer to perform the method according to any one of the first and second aspects.

In the above technical solutions, trigger information for performing a sensing measurement based on sensing measurement configuration information is introduced. In this way, sensing measurement may be performed at an appropriate time, such that power consumption of the sensing measurement is reduced, and the throughput of the sensing receiver is improved.

### BRIEF DESCRIPTION OF DRAWINGS

FIG. 1 is a schematic diagram of a communication system architecture applicable to some embodiments of the present disclosure;
FIG. 2 is a schematic diagram of a network architecture applicable to some embodiments of the present disclosure;
FIG. 3 is a flowchart of per-UE sensing according to the present disclosure;
FIG. 4 is a schematic diagram of single-point sensing according to the present disclosure;
FIG. 5 is a schematic diagram of multi-point cooperative sensing according to the present disclosure;
FIG. 6 is a schematic diagram of allocating sidelink transmission resources and receiving feedback information by the network according to the present disclosure;
FIG. 7 is a schematic diagram of resource allocation in mode 2 according to the present disclosure;
FIG. 8 is a schematic flowchart of a method for wireless sensing according to some embodiments of the present disclosure;
FIG. 9 is a schematic block diagram of a communication device according to some embodiments of the present disclosure;
FIG. 10 is a schematic block diagram of another communication device according to some embodiments of the present disclosure;
FIG. 11 is a schematic block diagram of yet another communication device according to some embodiments of the present disclosure;
FIG. 12 is a schematic block diagram of an apparatus according to some embodiments of the present disclosure; and
FIG. 13 is a schematic block diagram of a communication system according to some embodiments of the present disclosure.

### DETAILED DESCRIPTION

The technical solutions according to the embodiments of the present disclosure are described hereinafter with reference to the accompanying drawings in the embodiments of the present disclosure. It is obvious that the described embodiments are merely some rather that all of the embodiments of the present disclosure. All other embodiments derived by those skilled in the art without creative efforts fall within the protection scope of the present disclosure.

The technical solutions according to the embodiments of the present disclosure may be applicable to various communication systems, such as a global system of mobile communication (GSM), a code division multiple access (CDMA) system, a wideband code division multiple access (WCDMA) system, a general packet radio service (GPRS) system, a long-term evolution (LTE) system, an advanced LTE (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN) system, an Internet of things (IoT) system, a wireless fidelity (Wi-Fi) system, a 5^{th} generation (5G) communication system, a 6^{th} generation (6G) communication system, or other communication systems.

Generally, a conventional communication system supports a limited number of connections and is easy to implement. However, with development of communication technologies, a mobile communication system supports not only conventional communication but also other communications, such as device-to-device (D2D) communications, machine-to-machine (M2M) communications, machine-type communications (MTC), vehicle-to-vehicle (V2V) communications, sidelink (SL) communications, vehicle-to-everything (V2X) communications, and the like. The embodiments of the present disclosure are also applicable to these communication systems.

In some embodiments, the communication system in the embodiments of the present disclosure may be applicable to a carrier aggregation (CA) scenario, a dual connectivity (DC) scenario, a standalone (SA) networking scenario, or a non-standalone (NSA) networking scenario.

In some embodiments, the communication system in the embodiments of the present disclosure may be applicable to an unlicensed spectrum. The unlicensed spectrum may also be considered as a shared spectrum. Alternatively, the communication system in the embodiments of the present disclosure may also be applicable to a licensed spectrum. The licensed spectrum may also be considered as a non-shared spectrum.

In some embodiments, the communication system in the embodiments of the present disclosure may be applicable to an FR1 frequency band (corresponding to a frequency band range of 410 MHz to 7.125 GHz), an FR2 frequency band (corresponding to a frequency band range of 24.25 GHz to 52.6 GHz), and a new frequency band such as a high-frequency band corresponding to a frequency band range of 52.6 GHz to 71 GHz or a frequency band range of 71 GHz to 114.25 GHz.

The embodiments of the present disclosure are described in conjunction with a network device and a terminal device. The terminal device may also be referred to as a user equipment (UE), an access terminal, a subscriber unit, a subscriber station, a mobile station, a mobile terminal, a remote station, a remote terminal, a mobile device, a user terminal, a terminal, a wireless communication device, a user agent, a user apparatus, or the like.

The terminal device may be a station (ST) in WLAN, or a cellular phone, a cordless phone, a Session Initiation Protocol (SIP) phone, a wireless local loop (WLL) station, a personal digital assistant (PDA) device, a handheld device with wireless communication functions, a computing device or another processing device connected to a wireless modem, an in-vehicle device, a wearable device, a terminal device in a next-generation communication system such as a terminal device in an NR network, or a terminal device in an evolved public land mobile network (PLMN), or the like.

In the embodiments of the present disclosure, the terminal device may be deployed on land, for example, indoors or outdoors, handheld, wearable, or in-vehicle; or deployed on water (for example, a ship); or deployed in the air (for example, an airplane, a balloon, or a satellite).

In the embodiments of the present disclosure, the terminal device may be a mobile phone, a tablet computer (pad), a computer with wireless transceiver functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city or smart home, an in-vehicle communication device, a wireless communication chip/application specific integrated circuit (ASIC)/system on chip (SoC), or the like.

By way of example but not limitation, in the embodiments of the present disclosure, the terminal device may also be a wearable device. The wearable devices may also be referred to as a wearable smart device, and is a generic name of wearable devices such as glasses, gloves, watches, clothing, and shoes, which are intelligently designed and developed for daily wear using wearable technologies. The wearable device is a portable device that is worn directly on the body or integrated into the clothing or accessories of the user. The wearable device is not just a hardware device, but also implements powerful functions by software support, data interaction, and cloud interaction. The wearable smart devices in a broad sense include devices such as smart watches or smart glasses that have full functionality and large size, and are capable of implementing all or part of functionality without depending on smart phones, and devices such as various smart bands and smart jewelries for monitoring physical signs, which are dedicated to a specific type of application function and need to be used in conjunction with other devices such as the smart phones.

In the embodiments of the present disclosure, the network device may be a device used for communicating with a mobile device. The network device may be an access point (AP) in a WLAN, a base transceiver station (BTS) in GSM or CDMA, a NodeB (NB) in WCDMA, an evolved NodeB (eNB or eNodeB) in LTE, or a relay station or an access point. The network device may also be an in-vehicle device, a wearable device, and a network device or a base station (gNB) or a transmission reception point (TRP) in an NR network, or a network device in an evolved PLMN network or a network device in an NTN network, or the like.

By way of example but not limitation, in the embodiments of the present disclosure, network device may be mobile. For example, the network device is a mobile device. In some embodiments, the network devices is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device may also be a base station deployed on land, in water, or the like.

In the embodiments of the present disclosure, the network device may provide a service for a cell, and the terminal device communicates with network device over a transmission resource (e.g., a frequency domain resource, or a frequency spectrum resource) used in the cell. The cell corresponds to the network device (e.g., a base station), and the cell may belong to a macro base station or to a base station corresponding to a small cell. The small cell may include: a metro cell, a micro cell, a pico cell, a femto cell, or the like. The small cells have the characteristics of small coverage and low transmission power, and are suitable for providing high-speed data transmission services.

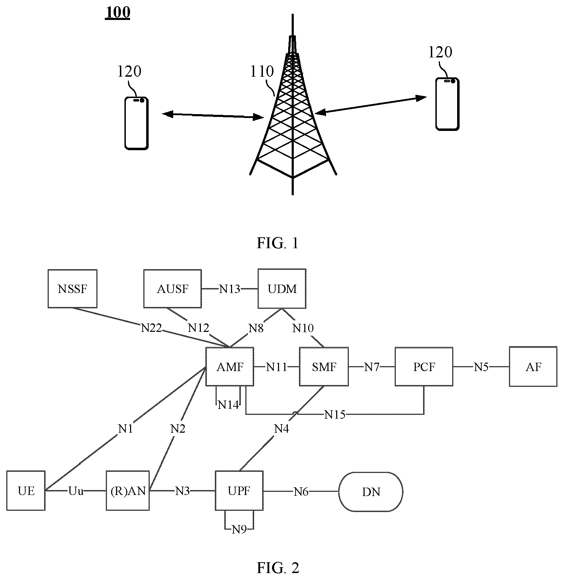

Exemplarily, a communication system 100 applicable to the embodiments of the present disclosure is illustrated in FIG. 1. The communication system 100 may include a network device 110, which may be a device that communicates with a terminal device 120 (also referred to as a communication terminal, or a terminal). The network device 110 may provide communication coverage to a specific geographic area, and may communicate with the terminal device located within that coverage area.

FIG. 1 exemplarily shows one network device and two terminal devices. In some embodiments, the communication system 100 may include a plurality of network devices, and each of the network devices covers other numbers of terminal devices, which is not limited in the embodiments of the present disclosure.

In some embodiments, the communication system 100 may also include a network controller, a mobile management entity, or other network entities, which is not limited in the embodiments of the present disclosure.

It should be understood that a device with a communication function in the network/system according to the embodiments of the present disclosure may be referred to as a communication device. Using the communication system 100 illustrated in FIG. 1 as an example, the communication device may include a network device 110 and a terminal device 120 with communication functions. The network device 110 and the terminal device 120 may be the specific devices described above, which are not described herein any further. The communication device may also include other devices in the communication system 100, such as a network controller, a mobile management entity, and other network entities, which is not limited in the embodiments of the present disclosure.

It should be understood that the terms "system" and "network" herein are often used interchangeably. The term "and/or" herein merely describes an associative relationship between associated objects, and indicates three types of relationships. For example, the phrase "A and/or B" means (A), (B), or (A and B). In addition, the symbol "/" herein generally indicates an "or" relationship between the associated objects before and after the symbol "/".

It should be understood that a first communication device and a second communication device are involved herein. The first communication device may be a terminal device, such as a mobile phone, a machine facility, a customer premise equipment (CPE), an industrial equipment, vehicle, or the like. The second communication device may be the peer communication device of the first communication device, such as a network device, a mobile phone, an industrial equipment, vehicle, or the like. In the embodiments of the present disclosure, the first communication device may be a terminal device, and the second communication device may be a network device (i.e., uplink communication or downlink communication). Alternatively, the first communication device may be a first terminal, and the second communication device may be a second terminal (i.e., SL communication).

The terms used in the embodiments of the present disclosure are intended to explain the specific embodiments of the present disclosure, not to limit the present disclosure. The terms "first," "second," "third," "fourth," and the like in the specification, claims and accompanying drawings of the present disclosure are used to distinguish different objects, not to describe a specific order. In addition, the terms "include" and "have" and any variations thereof are intended to cover non-exclusive inclusion.

It should be understood that the term "indication" in the embodiments of the present disclosure may be a direct indication, an indirect indication, or an indication of an associative relationship. For example, the expression "A indicates B" may mean that A directly indicates B, such as B may be obtained through A; or mean that A indirectly indicates B, such as A indicates C through which B may be obtained; or mean that an associative relationship is present between A and B.

In the description of the embodiments of the present disclosure, the term "correspond" indicates a direct or indirect corresponding relationship between two items, or indicates an associative relationship between the two items, or indicates a relationship such as indicating and being indicated, configuring and being configured, or the like.

In the embodiments of the present disclosure, the term "predefined" or "preconfigured" may be implemented by pre-storing corresponding codes, tables, or other means that may be used for indicating related information in the devices (e.g., including terminal devices and network devices). The present disclosure does not limit the specific implementation method. For example, the term "predefined" may refer to "defined" in protocols.

In the embodiments of the present disclosure, the term "protocol" may refer to standards or protocols in the field of communications, such as the evolution of LTE protocols, NR protocols, Wi-Fi protocols, or other related communication system protocols, which are not limited in the present disclosure.

For a better understanding of the embodiments of the present disclosure, the network architecture related to the present disclosure is described hereinafter.

FIG. 2 is a schematic diagram of a network architecture according to some embodiments of the present disclosure. As illustrated in FIG. 2, a 5G network architecture released by the 3^{rd} Generation Partnership Project (3GPP) standards group involves:

a terminal equipment (UE), a 3GPP technology-supported access network (including a radio access network (RAN) or an access network (AN)), a user plane function (UPF) network element, an access and mobility management function (AMF) network element, a session management function (SMF) network element, a policy control function (PCF) network element, an application function (AF) network element, a data network (DN) network element, a network slice selection function (NSSF) network element, an authentication server function (AUSF) network element, a unified data management (UDM) network element.

Those skilled in the art may understand that the 5G network architecture illustrated in FIG. 2 does not constitute limitations on the 5G network architecture. In specific implementations, the 5G network architecture may involve more or fewer network elements than those illustrated, or some of the network elements may be combined, or the like. It should be understood that in FIG. 2, AN or RAN is represented as (R)AN.

The access network device enables wireless access for the UE to the network architecture, and is mainly responsible for radio resource management, quality of service (QoS) management, data compression, encryption, and the like on air interface-side. For example, the access network device may be a base station (NodeB), an evolved base station (eNodeB), a base station in a 5G mobile communication system or a new radio (NR) communication system, a base station in evolved mobile communication systems, or the like.

The UPF network element, the AMF network element, the SMF network element, and the PCF network element are network elements of the 3GPP core network (abbreviated as core network elements). The UPF network element may be referred to as a user plane function network element, and is mainly responsible for the transmission of user data, while other network elements may be referred to as control plane function network elements, and are mainly responsible for authentication, registration management, session management, mobility management, policy control, and the like, to ensure reliable and stable transmission of user data.

The UPF network element may be configured to forward and receive terminal data. For example, the UPF network element may receive service data from the data network and transmit the service data to the terminal via the access network device. The UPF network element may also receive user data from the terminal via access network device and forward the user data to the data network. The transmission resources allocated and scheduled by the UPF network element for the terminal are managed and controlled by the SMF network element. The bearer between the terminal and the UPF network element may include: a user plane connection between the UPF network element and the access network device, and a channel established between the access network device and the terminal. The user plane connection enables the establishment of a quality of service (QoS) flow for data transmission between the UPF network element and the access network device.

The AMF network element may be configured to manage terminal access to the core network, such as terminal location updates, network registration, access control, terminal mobility management, terminal attachment and detachment, and the like. The AMF network element may also provide control plane storage resources for sessions during providing services for terminal sessions, to store a session identifier, an SMF network element identifier associated with the session identifier, and the like.

The SMF network element may be configured to select a user plane network element for the terminal, redirect the user plane network element for the terminal, allocate an Internet Protocol (IP) address for the terminal, establish a bearer (also referred to as a session) between the terminal and the UPF network element, modify, release, and QoS control of the session.

The PCF network element is configured to provide policies to the AMF network element and the SMF network element, such as QoS policies, slice selection policies, and the like.

The AF network element is configured to interact with 3GPP core network elements to support application impact data routing, access network exposure functions, and interact with the PCF network element for policy control, or the like.

The DN network element may provide data services for users, such as IP multimedia services (IMS) networks, the Internet, or the like. Various application servers (AS) may be deployed in DN, and provide different application services, such as operator services, Internet access, or third-party services. The AS is capable of implementing AF functions.

The NSSF network element is used for network slice selection, and supports functions including: selecting a set of network slice instances for serving the UE; determining allowed network slice selection assistance information (NSSAI), and determining the mapping to subscribed single-network slice selection assistance information (S-NSSAI) when needed; determining configured NSSAI, and determining the mapping to subscribed S-NSSAI when needed; determining possible AMF sets for querying the UE, or determining a list of candidate AMFs based on configuration.

The AUSF network element is configured to receive a request for terminal authentication from the AMF, request a key from the UDM, and forward the issued key to the AMF for authentication.

The UDM includes functions such as the generation and storage of user subscription data, management of authentication data, and supports interaction with external third-party servers.

The network elements in FIG. 2 may be network elements in hardware devices, software functions running on dedicated hardware, or virtualized functions instantiated on platforms (such as cloud platforms). It should be noted that the network architecture illustrated in FIG. 2 is only an exemplary illustration of the network elements involved in the entire network architecture, which are not limited in the embodiments of the present disclosure.

For a better understanding of the embodiments of the present disclosure, the sensing related to the present disclosure is described hereinafter.

The radio electromagnetic signals used in cellular networks may not only be used for wireless data transmission and communication but also have environmental sensing capabilities, such as user motion or gesture recognition, breathing monitoring, terminal movement speed measurement, environmental imaging, weather monitoring, or the like. With the official commercialization of the 5G technology, communication may be conducted not only between people, but also between things, and between people and things. In beyond 5G (B5G)/6G, higher requirements are imposed on end-to-end information processing capabilities, to achieve mutual state sensing during communication, and hence the concept of integrated sensing and communication is introduced. A communication signal transmitted by a base station or terminal may be used to detect and estimate a target, enabling communication while determining whether the target is present and estimating information such as a speed, a distance, and an angle of arrival. Therefore, future cellular networks may be considered not only for communication and data transmission but also for sensing information acquisition.

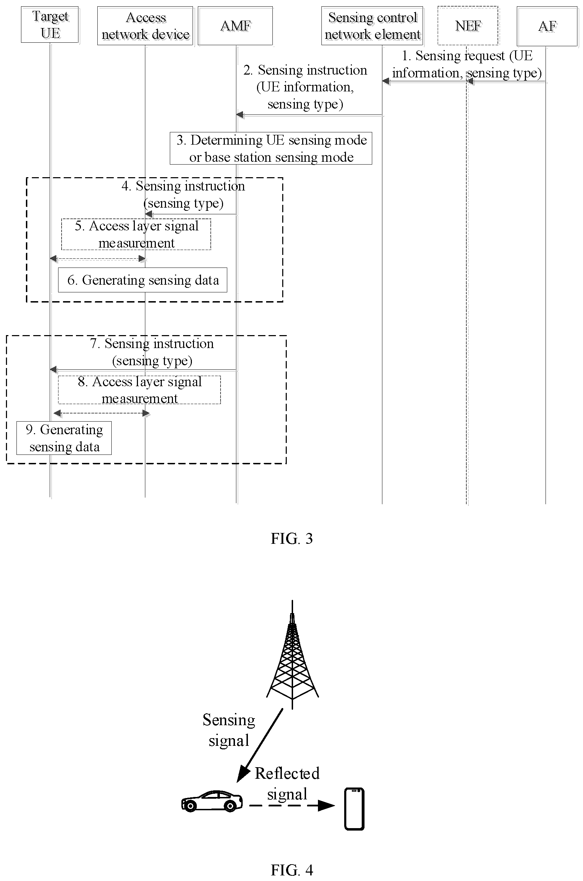

B5G networks support sensing capabilities. The sensing functions may be supported in 3GPP networks by adding a sensing control network element or a sensing function network element to the network architecture illustrated in FIG. 2 and designing corresponding sensing processes. Specifically, FIG. 3 is a possible flowchart for controlling an access network device or a UE to perform UE-level sensing operations. An application transmits a sensing request for a target UE to the core network of the 3GPP network, the core network selects the correct access network device or the auxiliary UE using the sensing control network element or the AMF network element, triggers the capability of performing sensing-related wireless measurements, and initiates sensing signal measurements and generates sensing results.

The main wireless sensing modes of integrated sensing and communication are as follows:
1) Base station echo sensing (single gNB self-transmission and self-reception sensing): The base station transmits sensing signals and receives echo signals.
2) Inter-base station sensing (gNB-gNB sensing): Base station B receives sensing signals from base station A.
3) Air interface uplink sensing (UE-gNB uplink sensing): The base station receives sensing signals from the terminal.
4) Air interface downlink sensing (UE-gNB downlink sensing): The terminal receives sensing signals from the base station.
5) Terminal echo sensing (single UE self-transmission and self-reception sensing): The terminal transmits sensing signals and receives echo signals.
6) Inter-terminal sensing (UE-UE sensing): Terminal B receives sensing signals from terminal A.

For a better understanding of the embodiments of the present disclosure, the multi-point cooperative sensing related to the present disclosure is described hereinafter.

Integrated sensing and communication mainly involve detecting and estimating a target using a communication signal transmitted by a base station or a terminal, enabling communication while determining whether a target is present and estimating information such as speed, distance, and angle of arrival.

Sensing performance is limited when sensing a target using a single base station or terminal. Specifically, single-station sensing performance is limited by the coverage range of the base station or terminal, or by the limited hardware processing capability of the base station or terminal. Additionally, sensing performance is affected due to the complex mobile communication environment and issues such as multipath and occlusion during signal propagation.

Considering the networked characteristics of mobile communication networks that a plurality of communication nodes are present and communicate and cooperate with each other, sensing performance may be improved by using multi-node cooperation in mobile communication networks, including improving coverage, overcoming occlusion, saving network/terminal energy, supporting mobility, improving sensing accuracy, enhancing the completeness of sensing information, and satisfying diverse QoS requirements.

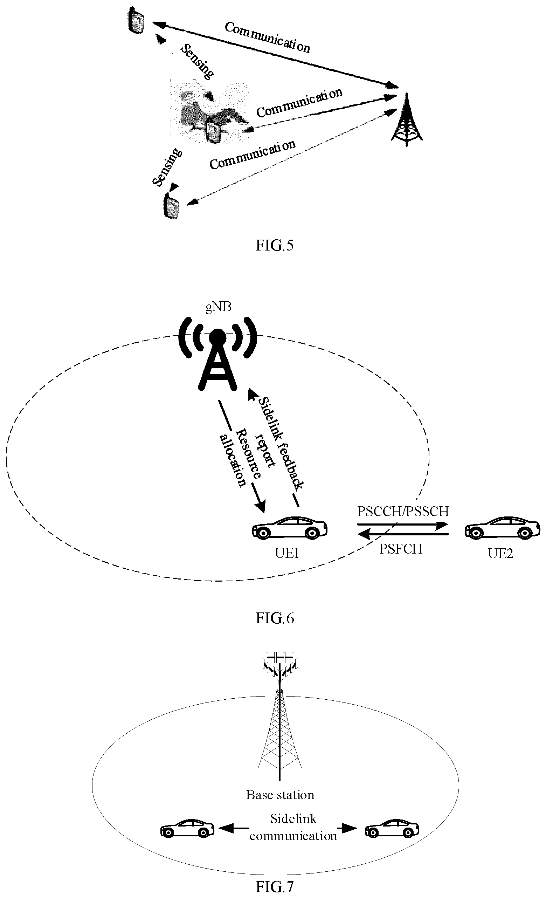

Multi-station cooperative sensing is mainly to research how a plurality of sensing nodes (base stations or UEs) cooperate to enhance sensing performance. Multi-point refers to the existence of a plurality of sensing links, i.e., at least multiple sensing signal transmitter nodes or a plurality of sensing signal receiver nodes. A mode in which one sensing link composed of one signal transmitter node and one signal receiver node is not within the scope of multi-point cooperative sensing research. As illustrated in FIG. 4, although two signal nodes are present, only one sensing link is present, i.e., single-point sensing. As illustrated in FIG. 5, two sensing links are present, i.e., multi-point sensing mode or multi-point cooperative sensing.

For a better understanding of the embodiments of the present disclosure, the SL transmission related to the present disclosure is described hereinafter.

The vehicle-to-everything (V2X) system is a type of SL transmission technology based on device-to-device (D2D) communications. Unlike the traditional NR system where communication data is received or transmitted by a base station, direct terminal-to-terminal communications is used in the V2X system, which offers higher spectrum efficiency and lower transmission delay.

The transmission of communication data requires time-frequency resources for carrying, and thus how a terminal determines reasonable time-frequency resources using resource allocation algorithms to avoid mutual interference is one of the important research topics in NR-V2X. In NR-V2X, two resource allocation modes are present. One is that the terminal determines transmission resources based on network scheduling or configuration, referred to as a mode 1, which includes dynamic scheduling and SL configuration authorization schemes. The other is that the terminal autonomously selects transmission resources from a network-configured or pre-configured resource pool, referred to as a mode 2, which includes basic resource reservation, resource selection algorithms, and re-evaluation and resource pre-emption mechanisms.

In the mode 1, the SL transmission resources of the in-vehicle terminal are allocated by the base station, and the in-vehicle terminal transmits data on the SL using the resources allocated by the base station. The base station may allocate resources to the terminal for a single transmission or semi-static transmission. FIG. 6 illustrates a dynamic resource allocation mode where the network schedules SL transmission (such as physical sidelink shared channel (PSSCH) or physical sidelink control channel (PSCCH)), the receiving end performs SL hybrid automatic repeat request (HARQ) feedback over the physical sidelink feedback channel (PSFCH), and the transmitting end reports HARQ feedback to the network.

In the mode 2, the terminal autonomously selects time-frequency resources for transmitting SL data from a network-configured or pre-configured resource pool by means of resource monitoring or random selection. Therefore, resource allocation in mode 2 may be more accurately described as the resource selection, as illustrated in FIG. 7. The in-vehicle terminal acquires a set of available transmission resources from the resource pool by means of monitoring, and the terminal randomly selects a resource from this set for SL data transmission. Since the services in the V2X system have periodic characteristics, the terminal usually adopts a semi-static transmission mode, i.e., after selecting a transmission resource, the terminal continues to use this resource for multiple transmission cycles, thereby reducing the probability of resource reselection and resource collisions. The terminal carries information about the reserved resource for next transmission in the control information of present transmission. In this way, other terminals are capable of determining whether this resource is reserved and used by detecting the control information of the user, such that the resource collisions are reduced.

In LTE V2X, SL transmission may use a dedicated carrier or share a carrier with uplink (UL). In a case where SL shares a carrier with UL, only uplink transmission resources may be used for SL transmission, such as uplink subframes in time division duplexing (TDD) systems or uplink carriers in frequency division duplexing (FDD) systems. Downlink resources are not used for UL transmission to avoid interference with the terminal.

In the NR system, NR-Uu supports flexible slot structures, i.e., a slot may include at least one of downlink symbols, uplink symbols, and flexible symbols, and the numbers of downlink symbols, uplink symbols, and flexible symbols may be configured. Flexible symbols indicate an uncertain transmission direction. This allows for more flexible scheduling and reduces an uplink or downlink transmission latency. In practical applications, the transmission direction of flexible symbols may be changed using configuration information or downlink control information (DCI). For example, flexible symbols may be changed to downlink symbols using DCI, or flexible symbols may be changed to uplink symbols using DCI. For example, in a case where a synchronization signal block (SSB) is configured for transmission on flexible symbols, it may be determined that the flexible symbol represents downlink transmission. In a case where the SL transmission system can share carriers with the cellular system, SL transmission may only use uplink transmission resources of the cellular system. In NR-V2X, part of the time-domain symbols in a slot may be used for SL transmission, i.e., part of the semi-statically configured uplink symbols in a slot may be used for SL transmission. Additionally, considering that automatic gain control (AGC) symbols and guard period (GP) symbols are needed in SL transmission, in a case where the number of uplink symbols available for SL transmission is small, after AGC symbols and GP symbols are removed, the remaining symbols may not accommodate PSSCH and the corresponding demodulation reference signal (DMRS). Therefore, in NR-V2X, the minimum number of time-domain symbols occupied by SL transmission is 7 (including GP symbols). In a case where the SL transmission system uses a dedicated carrier, no transmission resources are shared with other systems, and all symbols in a slot may be configured for SL transmission.

For a better understanding of the problem solved by the embodiments of the present disclosure, the problem addressed by the present disclosure is described hereinafter.

As illustrated in FIG. 4, a sensing transmitter (STx gNB) transmits sensing signals, and a sensing receiver (SRx UE) receives reflected signals, which are acquired upon reflection of the sensing signals from the sensed object. The sensing receiver (SRx UE) needs to report the measured transmitted signals to the network, and the network performs sensing calculations based on the collected measurement results. The sensing receiver (SRx UE) reports the measurement results according to relevant preparation criteria.

The resources over which the sensing receiver (SRx UE) performs measurements needs to be configured semi-statically by the network in terms of a gap. The sensing receiver (SRx UE) measures the transmitted signals based on the configured gap. Since the sensing receiver (SRx UE) does not know when the sensing transmitter (STx gNB) transmits the sensing signals, the sensing receiver may be assumed to measure the transmitted signals during corresponding gap after receiving the semi-static gap configuration from the network. This semi-static configuration of the gap leads to additional power consumption of the sensing receiver (SRx UE) during measurement and also results in a loss of throughput performance of the sensing receiver (SRx UE) (data fails to be transmitted or received during the gap).

In view of the above problem, the present disclosure proposes a solution for wireless sensing, in which trigger information for performing a sensing measurement based on sensing measurement configuration information is introduced. In this way, sensing measurement may be performed at an appropriate time, such that power consumption of sensing measurement is reduced, and the throughput of the sensing receiver is improved.

For a better understanding of the technical solutions according to the embodiments of the present disclosure, the technical solutions of the present disclosure are detailed through specific embodiments below. The following related technologies may be optionally combined with the technical solutions according to the embodiments of the present disclosure in any manner, and all fall within the protection scope of the embodiments of the present disclosure. The embodiments of the present disclosure include at least part of the following content.

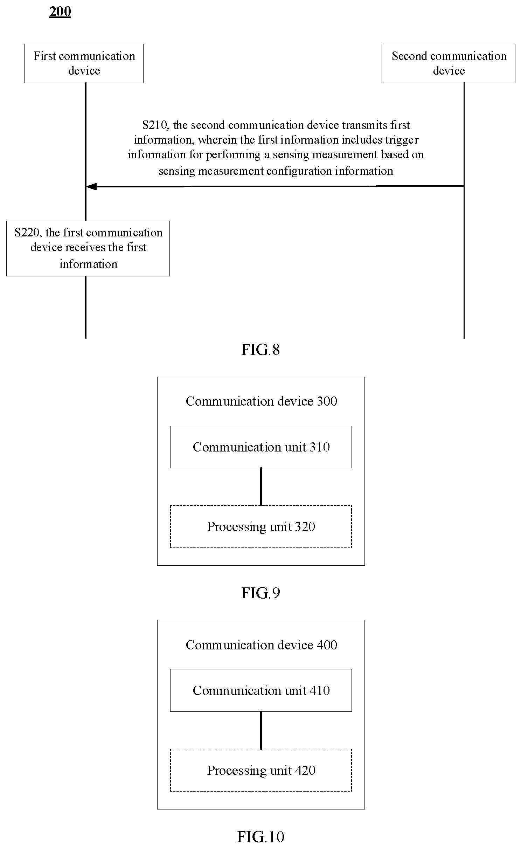

FIG. 8 is a schematic flowchart of the method 200 for wireless sensing according to some embodiments of the present disclosure. As illustrated in FIG. 8, the method 200 for wireless sensing may include at least part of the following processes.

In S210, a second communication device transmits first information, wherein the first information includes trigger information for performing a sensing measurement based on sensing measurement configuration information.

In S220, a first communication device receives the first information.

In the embodiments of the present disclosure, the trigger information for performing the sensing measurement based on the sensing measurement configuration information is introduced. In this way, sensing measurement may be performed at an appropriate time, such that power consumption of the sensing measurement is reduced, and throughput of a sensing receiver is improved.

In the embodiments of the present disclosure, a sensed object may be a vehicle, a pedestrian, an equipment, an item, or the like. A specific feature of the sensed object is to be sensed, such as a speed, a direction, a distance, or the like.

In some embodiments, the first communication device may be a sensing receiver (i.e., device receiving sensing signals). In the embodiments of the present disclosure, the first communication device performs the sensing measurement, specifically for sensing signals transmitted by a sensing transmitter, or for reflected signals of the sensing signals transmitted by the sensing transmitter from the sensed object.

In some embodiments, the second communication device may be the sensing transmitter (i.e., device transmitting the sensing signals), or may not be the sensing transmitter (i.e., device transmitting sensing signals), which is not limited in the embodiments of the present disclosure.

In the embodiments of the present disclosure, the sensing receiver may also be referred to as a sensing signal receiver or a sensing signal receiver device, and the sensing transmitter may also be referred to as a sensing signal transmitter or a sensing signal transmitter device.

In some embodiments, the first communication device may be a terminal device, and the second communication device may be a network device.

In some embodiments, the first communication device may be one terminal device, and the second communication device may be another terminal device.

In some embodiments, the sensing measurement configuration information may be information semi-statically configured by the network device. For example, the sensing measurement configuration information may include a semi-statically configured gap. The sensing measurement may be performed within the gap, or sensing signals may be received within the gap, and data fails to be transmitted or received within the gap.

In some embodiments, the sensing measurement configuration information includes at least one of a sensing reference signal configuration or a gap that needs to be measured. Specifically, during the gap, the sensing receiver needs to disconnect the current data transmission and reception (if present).

In some embodiments, the sensing transmitter may transmit sensing signals based on a specific condition, such as transmitting a sensing signal based on a sensing service request from an application layer. The resources for transmitting the sensing signal by the sensing transmitter are configured by the network. In addition, the network device may also configure the sensing reference signal configuration and the transmission manner of the sensing signal.

In some embodiments, the sensing reference signal may be a physical layer reference signal. In some embodiments, the sensing reference signal includes but is not limited to at least one of a channel state information reference signal (CSI-RS), a downlink positioning reference signals (DL PRS), a positioning sounding reference signal (SRS), or SL positioning reference signals (SL PRS).

In some embodiments, the sensing reference signal may be a reference signal specifically designed for sensing. In some embodiments, the sensing reference signal may include but is not limited to at least one of a frequency modulation continuous wave (FMCW), a linear frequency modulation signal or chirp signal, or an orthogonal time frequency space (OTFS).

In the embodiments of the present disclosure, after the first communication device (such as the sensing receiver) receives the sensing measurement configuration information, to ensure the data transmission and reception performance of the first communication device (such as the sensing receiver) (frequent measurements lead to frequent interruptions of data transmission and reception) and to save power as much as possible (frequent measurements lead to reduced power consumption), it is assumed that the first communication device (such as the sensing receiver) does not start the corresponding sensing measurement, i.e., the first communication device only receives the sensing measurement configuration information but does not immediately perform the sensing measurement based on the sensing measurement configuration information.

In some embodiments, the first information is carried by layer 1 or layer 2 signaling, for example, the first information is carried over downlink control information (DCI) or a medium access control (MAC) control element (CE).

In some embodiments, the trigger information indicates related information for the first communication device to perform the sensing measurement.

In some embodiments, the trigger information indicates whether the first communication device performs the sensing measurement.

In some embodiments, in a case where the trigger information indicates that the first communication device performs the sensing measurement, the trigger information is further used for indicating or configuring at least one of: start time information of the sensing measurement, a start condition of the sensing measurement, duration information of the sensing measurement, stop time information of the sensing measurement, a stop condition of the sensing measurement, or times of the sensing measurement.

In some embodiments, in a case where the trigger information indicates that the first communication device performs the sensing measurement, the trigger signal is further used for activating a timer associated with the sensing measurement, or the trigger signal is further used for activating a measurement rule (criteria) associated with the sensing measurement.

In some embodiments, the timer is defined by a protocol, or the timer is configured by the network device. In some embodiments, the timer is semi-statically configured by the network device, or the timer is dynamically configured by the network device. For example, the network device configures the timer using radio resource control (RRC).

In some embodiments, the measurement rule is defined by a protocol, or the measurement rule is configured by the network device. In some embodiments, the measurement rule is semi-statically configured by the network device, or the measurement rule is dynamically configured by the network device. For example, the network device configures the measurement rule using RRC.

In some embodiments, in a case where the trigger information is further used for activating a timer associated with the sensing measurement, the first communication device performs the sensing measurement based on the sensing measurement configuration information within the effective time of the timer, and the first communication device stops measuring sensing signals upon expiration of the timer or stops performing sensing measurement upon timeout of the timer.

In some embodiments, the timer starts in response to the first communication device receiving the first information, or the timer starts before the first gap to be measured that is configured by the sensing measurement configuration information, or the timer starts within the first duration after the first communication device receives the first information.

In some embodiments, the first duration is defined by a protocol, or the first duration is indicated or configured by the trigger information.

In some embodiments, the measurement rule includes:
the first communication device starting sensing measurement within the first gap to be measured that is configured by the sensing measurement configuration information, and stopping sensing measurement upon completion of M measurements, wherein M is a positive integer; or
the first communication device stopping sensing measurement in a case where the first sensing measurement intensity is not reached upon completion of N consecutive measurements based on the sensing measurement configuration information, wherein N is a positive integer.

In some embodiments, the first sensing measurement intensity is defined by a protocol, or the first sensing measurement intensity is indicated or configured by the trigger information.

In some embodiments, the trigger information is determined based on at least one of: a transmission timing of a sensing signal, a time-frequency resource occupied by a sensing signal, or a related configuration of a sensing reference signal.

Specifically, the second communication device may determine the trigger information based on at least one of a transmission timing of a sensing signal, a time-frequency resource occupied by a sensing signal, or a related configuration of a sensing reference signal.

In some embodiments, the first information is a sensing trigger signal, i.e., the second communication device may be a sensing trigger device. In other words, the sensing trigger device transmits a sensing trigger signal, wherein the sensing trigger signal includes trigger information for performing a sensing measurement based on sensing measurement configuration information.

In some embodiments, in a case where the first information is a sensing trigger signal, prior to transmitting the first information, the second communication device receives second information, wherein the second information indicates at least one of: a transmission timing of a sensing signal, a time-frequency resource occupied by a sensing signal, or a related configuration of a sensing reference signal; and the second communication device determines the trigger information based on the second information.

In some embodiments, the second information is directly transmitted by the device transmitting the sensing signal, or the second information is transmitted by the device transmitting the sensing signal via a third communication device.

Specifically, for example, the second communication device (such as a base station) transmits a sensing trigger signal, and the sensing transmitter (another base station or UE) transmits a sensing signal. That is, in a case where transmitter nodes of the sensing trigger signal and the sensing signal are not the same, these two nodes need to have some information (such as a transmission timing of a sensing signal, a time-frequency resource occupied by a sensing signal, or a related configuration of a sensing reference signal, or the like) interaction, such that the second communication device is capable of starting measuring the sensing signal based on the sensing trigger signal prior to the sensing transmitter transmitting the sensing signal. The interaction of information (such as a transmission timing of a sensing signal, a time-frequency resource occupied by a sensing signal, or a related configuration of a sensing reference signal, or the like) between different nodes may be direct interaction between these two nodes or centralized coordination and control by a specific network in the network.

In some embodiments, the first information is a sensing signal, i.e., the second communication device may be the sensing transmitter. That is, the sensing transmitter transmits a sensing signal, wherein the sensing signal includes trigger information for performing a sensing measurement based on sensing measurement configuration information.

Specifically, for example, the trigger information and the sensing signal both come from one node, such as the same base station or UE. In this scenario, the trigger information and the sensing signal are a single message, i.e., the sensing transmitter does not need to transmit the trigger information and the sensing signal separately. The sensing receiver, upon receiving this message, performs sensing signal measurement according to the indication of the trigger information, such as starting/stopping the measurement of the sensing signal.

In some embodiments, the first information is sensing measurement configuration information, i.e., the second communication device may be a network device. That is, the network device transmits sensing measurement configuration information, wherein the sensing measurement configuration information includes trigger information for performing a sensing measurement based on sensing measurement configuration information.

Specifically, for example, the trigger information received by the first communication device (sensing receiver) may also come from network configuration information, such as being included in the sensing measurement configuration information. The sensing measurement configuration information itself is a trigger information, and the first communication device starts the sensing signal measurement upon receiving the sensing measurement configuration information, and the corresponding measurement behavior (measurement times, duration, and the like) is determined based on the sensing measurement configuration information. In this implementation, the first communication device fails to know when the sensing transmitter initiates the transmitting of the sensing signal, and the first communication device only needs to start/stop measuring potential sensing signals based on the sensing measurement configuration information.

Therefore, in the embodiments of the present disclosure, trigger information for performing a sensing measurement based on sensing measurement configuration information is introduced. In this way, sensing measurement may be performed at an appropriate time, such that power consumption of sensing measurement is reduced, and the throughput of the sensing receiver is reduced.

The method embodiments of the present disclosure are described in detail above in conjunction with FIG. 8, and the device embodiments of the present disclosure are described in detail below in conjunction with FIGS. 9 to 13. It should be understood that the device embodiments correspond to the method embodiments, for similar descriptions, reference may be made to the method embodiments.

FIG. 9 illustrates a schematic block diagram of a communication device 300 according to some embodiments of the present disclosure. The communication device 300 is the first communication device. As illustrated in FIG. 9, the communication device 300 includes a communication unit 310, configured to receive first information, wherein the first information includes trigger information for performing a sensing measurement based on sensing measurement configuration information.

In some embodiments, the trigger information indicates whether the first communication device performs the sensing measurement.

In some embodiments, in a case where the trigger information indicates that the first communication device performs the sensing measurement, the trigger information is further used for indicating or configuring at least one of: start time information of the sensing measurement, a start condition of the sensing measurement, duration information of the sensing measurement, stop time information of the sensing measurement, a stop condition of the sensing measurement, or times of the sensing measurement.

In some embodiments, in a case where the trigger information indicates that the first communication device performs the sensing measurement, the trigger signal is further used for activating a timer associated with the sensing measurement, or the trigger signal is further used for activating a measurement rule associated with the sensing measurement.

In some embodiments, in a case where the trigger information is further used for activating a timer associated with the sensing measurement, the communication device 300 also includes a processing unit 320.

The processing unit 320 is configured to perform sensing measurement based on the sensing measurement configuration information within an effective time of the timer, and the processing unit 320 is further configured to stop performing sensing measurement upon expiration of the timer.

In some embodiments, the timer starts in response to the first communication device receiving the first information, or the timer starts before a first gap to be measured that is configured by the sensing measurement configuration information, or the timer starts within a first duration after the first communication device receives the first information.

In some embodiments, the first duration is defined by a protocol, or the first duration is indicated or configured by the trigger information.

In some embodiments, the timer is defined by a protocol, or the timer is configured by the network device.

In some embodiments, in a case where the trigger information is further used for activating a measurement rule associated with the sensing measurement, the measurement rule includes:
the first communication device starting sensing measurement within a first gap to be measured that is configured by the sensing measurement configuration information, and stopping sensing measurement upon completion of M measurements, wherein M is a positive integer; or
the first communication device stopping sensing measurement in a case where the first sensing measurement intensity is not reached upon completion of N consecutive measurements based on the sensing measurement configuration information, wherein N is a positive integer.

In some embodiments, the first sensing measurement intensity is defined by a protocol, or the first sensing measurement intensity is indicated or configured by the trigger information.

In some embodiments, the measurement rule is defined by a protocol, or the measurement rule is configured by the network device.

In some embodiments, the trigger information is determined based on at least one of: a transmission timing of a sensing signal, a time-frequency resource occupied by a sensing signal, or a related configuration of a sensing reference signal.

In some embodiments, the first information is a sensing trigger signal, or the first information is a sensing signal, or the first information is the sensing measurement configuration information.

In some embodiments, the communication unit may be a communication interface or a transceiver, or an input-output interface of a communication chip or system on chip. The processing unit may include one or more processors.

It should be understood that the communication device 300 according to the embodiments of the present disclosure may correspond to the first communication device in the method embodiments of the present disclosure, and the above and other operations and/or functions of each unit in the communication device 300 are respectively to implement the corresponding process of the first communication device in the method 200 illustrated in FIG. 8. For brevity, details are not described herein any further.

FIG. 10 illustrates a schematic block diagram of a communication device 400 according to some embodiments of the present disclosure. The communication device 400 is the second communication device. As illustrated in FIG. 10, the communication device 400 includes: a communication unit 410, configured to transmit first information, wherein the first information includes trigger information for performing a sensing measurement based on sensing measurement configuration information.

In some embodiments, the trigger information indicates whether the first communication device performs the sensing measurement.

In some embodiments, in a case where the trigger information indicates that the first communication device performs the sensing measurement, the trigger information is further used for indicating or configuring at least one of: start time information of the sensing measurement, a start condition of the sensing measurement, duration information of the sensing measurement, stop time information of the sensing measurement, a stop condition of the sensing measurement, or times of the sensing measurement.

In some embodiments, in a case where the trigger information indicates that the first communication device performs the sensing measurement, the trigger signal is further used for activating a timer associated with the sensing measurement, or the trigger signal is further used for activating a measurement rule associated with the sensing measurement.

In some embodiments, in a case where the trigger information is further used for activating a timer associated with the sensing measurement, the first communication device performs the sensing measurement based on the sensing measurement configuration information within an effective time of the timer, and the first communication device stops the sensing measurement upon expiration of the timer.

In some embodiments, the timer starts in response to the first communication device receiving the first information, or the timer starts before a first gap to be measured that is configured by the sensing measurement configuration information, or the timer starts within a first duration after the first communication device receives the first information.

**In** some embodiments, the first duration is defined by a protocol, or the first duration is indicated or configured by the trigger information.

**In** some embodiments, the timer is defined by a protocol, or the timer is configured by the network device.

**In** some embodiments, in a case where the trigger information is further used for activating a measurement rule associated with the sensing measurement, the measurement rule includes:
the first communication device starting sensing measurement within a first gap to be measured that is configured by the sensing measurement configuration information, and stopping sensing measurement upon completion of M measurements, wherein M is a positive integer; or
the first communication device stopping sensing measurement in a case where the first sensing measurement intensity is not reached upon completion of N consecutive measurements based on the sensing measurement configuration information, wherein N is a positive integer.

In some embodiments, the first sensing measurement intensity is defined by a protocol, or the first sensing measurement intensity is indicated or configured by the trigger information.

In some embodiments, the measurement rule is defined by a protocol, or the measurement rule is configured by the network device.

In some embodiments, the trigger information is determined based on at least one of: a transmission timing of a sensing signal, a time-frequency resource occupied by a sensing signal, or a related configuration of a sensing reference signal.

In some embodiments, the first information is a sensing trigger signal, or the first information is a sensing signal, or the first information is the sensing measurement configuration information.

In some embodiments, in a case where the first information is a sensing trigger signal, prior to transmitting the first information, the communication device 400 further includes a processing unit 420.

The communication unit 410 is further configured to receive second information, wherein the second information indicates at least one of: a transmission timing of a sensing signal, a time-frequency resource occupied by a sensing signal, or a related configuration of a sensing reference signal.

The processing unit 420 is configured to determine the trigger information based on the second information.

In some embodiments, the second information is directly transmitted by the device transmitting the sensing signal, or the second information is transmitted by the device transmitting the sensing signal via a third communication device.

In some embodiments, the communication unit may be a communication interface or a transceiver, or an input-output interface of a communication chip or system on chip. The processing unit may include one or more processors.

It should be understood that the communication device 400 according to the embodiments of the present disclosure may correspond to the second communication device in the method embodiments of the present disclosure, and the above and other operations and/or functions of each unit in the communication device 400 are respectively to implement the corresponding process of the second communication device in the method 200 illustrated in FIG. 8. For brevity, described are not described herein any further.

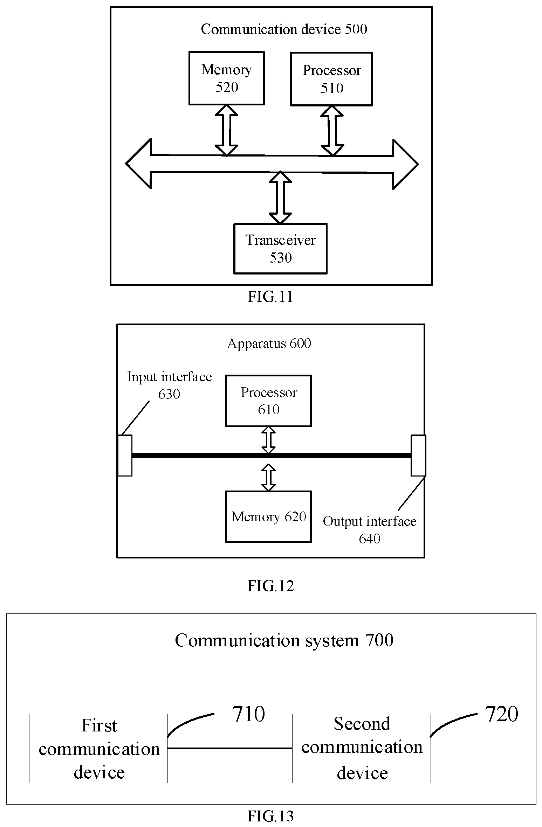

FIG. 11 is a schematic structural diagram of a communication device 500 according to some embodiments of the present disclosure. As illustrated in FIG. 11, the communication device 500 includes a processor 510. The processor 510 is configured to load and run one or more computer programs from a memory to perform the method in the embodiments of the present disclosure.

In some embodiments, as illustrated in FIG. 11, the communication device 500 further includes a memory 520. The processor 510 is configured to load and run one or more computer programs from the memory 520 to perform the method in the embodiments of the present disclosure.

The memory 520 may be a separate device independent of the processor 510, or may be integrated into the processor 510.

In some embodiments, as illustrated in FIG. 11, the communication device 500 may further include a transceiver 530. The processor 510 may control the transceiver 530 to communicate with other devices, specifically, to transmit information or data to other devices, or to receive information or data from other devices.

The transceiver 530 may include a transmitter and a receiver. The transceiver 530 may further include one or more antennas.

In some embodiments, the processor 510 may implement the function of the processing unit in the first communication device, or the processor 510 may implement the function of the processing unit in the second communication device. For brevity, details are not described herein any further.

In some embodiments, the transceiver 530 can implement the function of the communication unit in the first communication device. For brevity, details are not described herein any further.

In some embodiments, the transceiver 530 may implement the function of the communication unit in the second communication device. For brevity, details are not described herein any further.

In some embodiments, the communication device 500 may specifically be the second communication device in the embodiments of the present disclosure, and the communication device 500 may implement the corresponding process in the methods of the embodiments of the present disclosure implemented by the second communication device. For brevity, details are not described herein any further.

In some embodiments, the communication device 500 may specifically be the first communication device in the embodiments of the present disclosure, and the communication device 500 may implement the corresponding process in the methods of the embodiments of the present disclosure implemented by the first communication device. For brevity, details are not described herein any further.

FIG. 12 is a schematic structural diagram of an apparatus 600 according to some embodiments of the present disclosure. As illustrated in FIG. 12, the apparatus 600 includes a processor 610. The processor 610 is configured to load and run one or more computer programs from a memory to implement the method in the embodiments of the present disclosure.

In some embodiments, as illustrated in FIG. 12, the apparatus 600 further includes a memory 620. The processor 610 is configured to load and run one or more computer programs from the memory 620 to perform the method in the embodiments of the present disclosure.

The memory 620 may be a separate device independent of the processor 610, or may be integrated into the processor 610.

In some embodiments, the apparatus 600 further includes an input interface 630. The processor 610 may control the input interface 630 to communicate with other devices or chips, specifically, to acquire information or data transmitted by other devices or chips. In some embodiments, the processor 610 may be located inside or outside the chip.

In some embodiments, the processor 610 may implement the function of the processing unit in the first communication device, or the processor 610 may implement the function of the processing unit in the second communication device. For brevity, details are not described herein any further.

In some embodiments, the input interface 630 may implement the function of the communication unit in the first communication device, or the input interface 630 may implement the function of the communication unit in the second communication device.

In some embodiments, the apparatus 600 further includes an output interface 640. The processor 610 may control the output interface 640 to communicate with other devices or chips, specifically, to output information or data to other devices or chips. In some embodiments, the processor 610 may be located inside or outside the chip.

In some embodiments, the output interface 640 may implement the function of the communication unit in the first communication device, or the output interface 640 may implement the function of the communication unit in the second communication device.

In some embodiments, the apparatus may be applicable to the second communication device in the embodiments of the present disclosure, and the apparatus may implement the corresponding process in the methods of the embodiments of the present disclosure implemented by the second communication device. For brevity, details are not described herein any further.

In some embodiments, the apparatus may be applicable to the first communication device in the embodiments of the present disclosure, and the apparatus may implement the corresponding process in the methods of the embodiments of the present disclosure implemented by the first communication device. For brevity, details are not described herein any further.

In some embodiments, the apparatus mentioned in the embodiments of the present disclosure may be a chip. For example, the apparatus may be a system-level chip, a system chip, a chip system, or a system-on-chip, or the like.

FIG. 13 is a schematic block diagram of a communication system 700 according to some embodiments of the present disclosure. As illustrated in FIG. 9, the communication system 700 includes a first communication device 710 and a second communication device 720.

The first communication device 710 may be configured to implement the corresponding functions implemented by the first communication device in the methods mentioned above, and the second communication device 720 may be configured to implement the corresponding functions implemented by the second communication device in the methods mentioned above. For brevity, details are not described herein any further.

It should be understood that the processor in the embodiments of the present disclosure may be an integrated circuit chip with signal processing capabilities. In the implementation process, each process of the method embodiments may be completed by the integrated logic circuit of the hardware in the processor or in the form of software instructions. The processor may be a general-purpose processor, a digital signal processor (DSP), an application-specific integrated circuit (ASIC), a field-programmable gate array (FPGA), or other programmable logic devices, discrete gate or transistor logic devices, discrete hardware components. The processor may implement or execute the methods, processes, and logic diagrams according to the embodiments of the present disclosure. The general-purpose processor may be a microprocessor, any conventional processor, or the like. The processes of the methods disclosed in the embodiments of the present disclosure may be directly performed by a hardware decoding processor, or performed by a combination of hardware and software modules in the decoding processor. The software module may be disposed in a random-access memory (RAM), a flash memory, a read-only memory (ROM), a programmable read-only memory (PROM), or an electrically erasable programmable memory, a register, or other mature storage medium in the art. The storage medium is disposed in the memory, and the processor reads the information in the memory and performs the processes of the methods in combination with hardware in the processor.

It should be understood that the memory in the embodiments of the present disclosure may be a volatile memory or a non-volatile memory, or may include both a volatile memory and a non-volatile memory. The non-volatile memory may be a ROM, a PROM, an erasable PROM (EPROM), an electrically EPROM (EEPROM), or a flash memory. The volatile memory may be a RAM, which is used as an external cache. By way of example but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memory involved in the systems and methods described herein is intended to include but is not limited to these and any other suitable types of memory.

It should be understood that the above memory is exemplary but not for limitation. For example, the memory in the embodiments of the present disclosure may also be an SRAM, a DRAM, an SDRAM, a DDR SDRAM, an ESDRAM, an SLDRAM, a DR RAM, or the like. That is, the memory in the embodiments of the present disclosure is intended to include but is not limited to these and any other suitable types of memory.

Some embodiments of the present disclosure further provide a computer-readable storage medium for storing one or more computer programs.

In some embodiments, the computer-readable storage medium may be applicable to the second communication device in the embodiments of the present disclosure. The one or more computer programs, when loaded and run by a computer, cause the computer to perform the corresponding process performed by the second communication device in the methods according to the embodiments of the present disclosure. For brevity, details are not described herein any further.

In some embodiments, the computer-readable storage medium may be applicable to the first communication device in the embodiments of the present disclosure. The one or more computer programs, when loaded and run by a computer, cause the computer to perform the corresponding process performed by the first communication device in the methods according to the embodiments of the present disclosure. For brevity, details are not described herein any further.

Some embodiments of the present disclosure further provide a computer program product, including on or more computer program instructions.

In some embodiments, the computer program product may be applicable to the second communication device in the embodiments of the present disclosure. The one or more computer program instructions, when loaded and executed by a computer, cause the computer to perform the corresponding processes performed by the second communication device in the methods according to the embodiments of the present disclosure. For brevity, details are not described herein any further.

In some embodiments, the computer program product may be applicable to the first communication device in the embodiments of the present disclosure. The one or more computer program instructions, when loaded and executed by a computer, cause the computer to perform the corresponding processes performed by the first communication device in the methods according to the embodiments of the present disclosure. For brevity, details are not described herein any further.

Some embodiments of the present disclosure further provide a computer program.

In some embodiments, the computer program may be applicable to the second communication device in the embodiments of the present disclosure. The computer program, when loaded and run by a computer, causes the computer to perform the corresponding processes performed by the second communication device in methods according to some embodiments of the present disclosure. For brevity, details are not described herein any further.

In some embodiments, the computer program may be applicable to the first communication device in the embodiments of the present disclosure. The computer program, when loaded and run by a computer, causes the computer to perform the corresponding processes performed by the first communication device in methods according to some embodiments of the present disclosure. For brevity, details are not described herein any further.

Those skilled in the art may understand that, in combination with the examples described in the embodiments disclosed herein, the units and algorithm steps may be implemented by electronic hardware, or a combination of computer software and electronic hardware. Whether these functions are implemented by hardware or software depends on the specific application and design constraints of the technical solution. Those skilled in the art may implement the described functions in different ways for each specific application, but such implementation should not be considered beyond the scope of the present disclosure.

Those skilled in the art clearly understand that for the convenience and brevity of description, and for specific working process of the systems, apparatus, and units described above, reference may be made to corresponding process in the method embodiments mentioned above, which are not described herein any further.

In the several embodiments according to the present disclosure, it should be understood that the disclosed systems, apparatus, and methods may be implemented in other ways. For example, the apparatus embodiments described above are merely exemplary. For example, the division of the units is merely a logical function division, and may be other division in actual implementation. For example, multiple units or components may be combined or integrated into another system, or some features may be omitted or not executed. In addition, the displayed or discussed mutual coupling or direct coupling or communication connection may be implemented over some interfaces. The indirect coupling or communication connection of apparatus or units may be implemented in electrical, mechanical, or other forms.

The units described as separate components may be or may not be physically separated, and the components illustrated as units may be or may not be physical units, i.e., they may be disposed in one place, or may be distributed across multiple network units. Some or all of the units may be selected according to actual needs to achieve the solution of the embodiments.

In addition, the functional units in each embodiment of the present disclosure may be integrated into one processing unit, or each unit may exist independently physically, or two or more units may be integrated into one unit.

In a case where the function is implemented in the form of a software functional unit and sold or used as an independent product, the function may be stored in a computer-readable storage medium. For such understanding, the technical solution of the present disclosure, or the part of the technical solution that contributes to the prior art, may be implemented in the form of a software product. The computer software product is stored in a storage medium, including several instructions to cause a computer device (which may be a personal computer, a server, a network device, or the like) to perform all or some of the processes of the methods described in the embodiments of the present disclosure. The storage medium includes: a universal serial bus (USB) flash disk, a mobile hard disk, a ROM, a RAM, a magnetic disk, an optical disk, or other medium capable of storing program codes.

The above descriptions are merely specific embodiments of the present disclosure, but the protection scope of the present disclosure is not limited to this. Any variation or substitutions readily derived by those by those skilled in the art within the technical scope of the present disclosure shall fall within the protection scope of the present disclosure. Therefore, the protection scope of the present disclosure should be subject to the protection scope of the claims.

## Claims

1. A method for wireless sensing, applicable to a first communication device, the method comprising:
receiving first information;
wherein the first information comprises trigger information for performing a sensing measurement based on sensing measurement configuration information.

2. The method according to claim 1, wherein the trigger information indicates whether the first communication device performs the sensing measurement.

3. The method according to claim 2, wherein in a case where the trigger information indicates that the first communication device performs the sensing measurement, the trigger information is further used for indicating or configuring at least one of:
start time information of the sensing measurement, a start condition of the sensing measurement, duration information of the sensing measurement, stop time information of the sensing measurement, a stop condition of the sensing measurement, or times of the sensing measurement.

4. The method according to claim 2, wherein in a case where the trigger information indicates that the first communication device performs the sensing measurement, the trigger signal is further used for activating a timer associated with the sensing measurement, or the trigger signal is further used for activating a measurement rule associated with the sensing measurement.

5. The method according to claim 4, wherein in a case where the trigger information is further used for activating the timer associated with the sensing measurement, the method further comprises:
performing the sensing measurement based on the sensing measurement configuration information within an effective time of the timer, and stopping the sensing measurement upon expiration of the timer.

6. The method according to claim 5, wherein
the timer starts in response to the first communication device receiving the first information; or
the timer starts before a first gap to be measured that is configured by the sensing measurement configuration information; or
the timer starts within a first duration after the first communication device receives the first information.

7. The method according to claim 6, wherein the first duration is defined by a protocol, or the first duration is indicated or configured by the trigger information.

8. The method according to any one of claims 5 to 7, wherein the timer is defined by a protocol, or the timer is configured by a network device.

9. The method according to claim 4, wherein in a case where the trigger information is further used for activating the measurement rule associated with the sensing measurement, the measurement rule comprises:
the first communication device starting the sensing measurement within a first gap to be measured that is configured by the sensing measurement configuration information, and stopping the sensing measurement upon completion of M measurements, wherein M is a positive integer; or
the first communication device stopping the sensing measurement in a case where a first sensing measurement intensity is not reached upon completion of N consecutive measurements based on the sensing measurement configuration information, wherein N is a positive integer.

10. The method according to claim 9, wherein the first sensing measurement intensity is defined by a protocol, or the first sensing measurement intensity is indicated or configured by the trigger information.

11. The method according to claim 9 or 10, wherein the measurement rule is defined by a protocol, or the measurement rule is configured by a network device.

12. The method according to any one of claims 1 to 11, wherein the trigger information is determined based on at least one of:
a transmission timing of a sensing signal, a time-frequency resource occupied by a sensing signal, or a related configuration of a sensing reference signal.

13. The method according to any one of claims 1 to 12, wherein the first information is a sensing trigger signal, or the first information is a sensing signal, or the first information is the sensing measurement configuration information.

14. A method for wireless sensing, applicable to a second communication device, the method comprising:
transmitting first information;
wherein the first information comprises trigger information for performing a sensing measurement based on sensing measurement configuration information.

15. The method according to claim 14, wherein the trigger information indicates whether a first communication device performs the sensing measurement.

16. The method according to claim 15, wherein in a case where the trigger information indicates that the first communication device performs the sensing measurement, the trigger information is further used for indicating or configuring at least one of:
start time information of the sensing measurement, a start condition of the sensing measurement, duration information of the sensing measurement, stop time information of the sensing measurement, a stop condition of the sensing measurement, or times of the sensing measurement.

17. The method according to claim 15, wherein in a case where the trigger information indicates that the first communication device performs the sensing measurement, the trigger signal is further used for activating a timer associated with the sensing measurement, or the trigger signal is further used for activating a measurement rule associated with the sensing measurement.

18. The method according to claim 17, wherein in a case where the trigger information is further used for activating a timer associated with the sensing measurement, the first communication device performs the sensing measurement based on the sensing measurement configuration information within an effective time of the timer, and the first communication device stops the sensing measurement upon expiration of the timer.

19. The method according to claim 18, wherein
the timer starts in response to the first communication device receiving the first information; or
the timer starts before a first gap to be measured that is configured by the sensing measurement configuration information; or
the timer starts within a first duration after the first communication device receives the first information.

20. The method according to claim 19, wherein the first duration is defined by a protocol, or the first duration is indicated or configured by the trigger information.

21. The method according to any one of claims 18 to 20, wherein
the timer is defined by a protocol, or the timer is configured by a network device.

22. The method according to claim 17, wherein in a case where the trigger information is further used for activating the measurement rule associated with the sensing measurement, the measurement rule comprises:
the first communication device starting the sensing measurement within a first gap to be measured that is configured by the sensing measurement configuration information, and stopping the sensing measurement upon completion of M measurements, wherein M is a positive integer; or
the first communication device stopping the sensing measurement in a case where a first sensing measurement intensity is not reached upon completion of N consecutive measurements based on the sensing measurement configuration information, wherein N is a positive integer.

23. The method according to claim 22, wherein the first sensing measurement intensity is defined by a protocol, or the first sensing measurement intensity is indicated or configured by the trigger information.

24. The method according to claim 22 or 23, wherein the measurement rule is defined by a protocol, or the measurement rule is configured by a network device.

25. The method according to any one of claims 14 to 24, wherein the trigger information is determined based on at least one of:
a transmission timing of a sensing signal, a time-frequency resource occupied by a sensing signal, or a related configuration of a sensing reference signal.

26. The method according to any one of claims 14 to 25, wherein the first information is a sensing trigger signal, or the first information is a sensing signal, or the first information is the sensing measurement configuration information.

27. The method according to claim 26, wherein in a case where the first information is the sensing trigger signal, prior to transmitting the first information, the method further comprises:
receiving second information, wherein the second information indicates at least one of: a transmission timing of a sensing signal, a time-frequency resource occupied by a sensing signal, or a related configuration of a sensing reference signal; and
determining the trigger information.

28. The method according to claim 27, wherein the second information is directly transmitted by a device that transmits the sensing signal, or the second information is transmitted by a device that transmits the sensing signal via a third communication device.

29. A communication device, wherein the communication device is a first communication device, and the communication device comprises:
a communication unit, configured to receive first information;
wherein the first information comprises trigger information for performing a sensing measurement based on sensing measurement configuration information.

30. A communication device, wherein the communication device is a second communication device, and the communication device comprises:
a communication unit, configured to transmit first information;
wherein the first information comprises trigger information for performing a sensing measurement based on sensing measurement configuration information.

31. A terminal device, comprising: a processor and a memory, wherein the memory is configured to store one or more computer programs, wherein the processor is configured to load and run the one or more computer programs stored in the memory, to cause the terminal device to perform the method as defined in any one of claims 1 to 13.

32. A network device, comprising: a processor and a memory, wherein the memory is configured to store one or more computer program, wherein the processor is configured to load and run the one or more computer programs stored in the memory, to cause the network device to perform the method as defined in any one of claims 14 to 28.

33. A chip, comprising: a processor, configured to load and run one or more computer programs from a memory, to cause a device equipped with the chip to perform the method as defined in any one of claims 1 to 13.

34. A chip, comprising: a processor, configured to load and run one or more computer programs from a memory, to cause a device equipped with the chip to perform the method as defined in any one of claims 14 to 28.

35. A computer-readable storage medium, storing one or more computer programs, wherein the one or more computer programs, when loaded and run by a computer, cause the computer to perform the method as defined in any one of claims 1 to 13.

36. A computer-readable storage medium, storing one or more computer programs, wherein the one or more computer programs, when loaded and run by a computer, cause the computer to perform the method as defined in any one of claims 14 to 28.

37. A computer program product, comprising: one or more computer program instructions, wherein the one or more computer program instructions, when loaded and executed by a computer, cause the computer to perform the method as defined in any one of claims 1 to 13.

38. A computer program product, comprising: one or more computer program instructions, wherein the one or more computer program instructions, when loaded and executed by a computer, cause the computer to perform the method as defined in any one of claims 14 to 28.

39. A computer program, wherein the computer program, when loaded and run by a computer, causes the computer to perform the method as defined in any one of claims 1 to 13.

40. A computer program, wherein the computer program, when loaded and run by a computer, causes the computer to perform the method as defined in any one of claims 14 to 28.
